# EUROPÄISCHE PATENTSCHRIFT

(11) **EP 3 990 501 B1**
(45) Veröffentlichungstag und Bekanntmachung des Hinweises auf die Patenterteilung: **29.07.2026**
(21) Anmeldenummer: 20842576.9
(22) Anmeldetag: 23.12.2020
(51) Int. Cl.: C08B 16/00

(54) **HERSTELLEN VON REGENERIERTEN POLYSACCHARIDEN**
PREPARATION OF REGENERATED POLYSACCHARIDES
PRÉPARATION DE POLYSACCHARIDES RÉGÉNÉRÉS

(30) Priorität: 23.12.2019 DE 102019135776; 07.02.2020 DE 102020103195
(43) Veröffentlichungstag der Anmeldung: 04.05.2022
(73) Patentinhaber: Universität Rostock, 18055 Rostock (DE)
(72) Erfinder: HOLLMANN, Dirk, 18209 Bad Doberan (DE); NGUYEN, Mai Ngoc, 18051 Rostock (DE); KRAGL, Udo, 18198 Kritzmow (DE)
(74) Vertreter: PATERIS Patentanwälte PartmbB
(86) Internationale Anmeldenummer: PCT/EP2020/087783
(87) Internationale Veröffentlichungsnummer: WO 2021/130323

(56) Entgegenhaltungen:
- WO-A1-2019/180321
- US-A- 5 656 373
- US-A1- 2014 212 670

## Beschreibung

Die Erfindung betrifft ein Verfahren zum Herstellen eines regenerierten Polysaccharids, ein durch das Verfahren hergestelltes und als Film bereitgestelltes regeneriertes Polysaccharid sowie ein Produkt aus dem regenerierten Polysaccharid.

Polysaccharide sind Kohlenhydrat-Polymere aus mindestens elf Monosacchariden, die über eine glycosidische Bindung verbunden sind. Das in der Natur häufigste Polysaccharid ist Cellulose. Cellulose wird als Rohstoff in der Papierindustrie sowie in der Bau-, Textil- und chemischen Industrie verwendet. Weiterhin werden Cellulose und ihre Derivate seit Jahrzehnten in zahlreichen Bereichen wie Umwelttechnologie, Filtration und medizinischen Anwendungen eingesetzt.

Cellulose ist ein Biopolymer, das von Pflanzen synthetisiert wird. Natürliche, kristalline Cellulose wird zum Verarbeiten bzw. Herstellen von Produkten häufig in künstliche, regenerierte Cellulose umgewandelt. Als regenerierte Cellulose wird hier Cellulose verstanden, welche gelöst und wieder ausgefällt wurde. Dabei wird durch Quellungs- und Lösungsvorgänge das Kristallgitter der natürlichen Cellulose verändert, wobei die molekulare Struktur der Cellulose nicht verändert wird. Diese Umwandlung ist irreversibel, da die regenerierte Cellulose die thermodynamisch stabilste Form von Cellulose ist. Darüber hinaus kann Cellulose auch chemisch synthetisiert werden.

Die Verarbeitung von Cellulose zum Herstellen von regenerierten Cellulosefasern und -filmen wird seit mehr als einem Jahrhundert von dem Viskoseweg (Cellophan-Cellulose) und Cuprammoniumweg (Cuprophan-Cellulose) dominiert. Diese Verfahren sind jedoch mit einer erheblichen Umweltverschmutzung verbunden, die mit einer Reihe von wirtschaftlichen Problemen einhergehen. Es besteht daher der Wunsch nach umweltfreundlicheren, einfacheren und energiesparenden Verfahren.

In den letzten Jahren wurden verschiedene industrielle und nicht-industrielle Verfahren für die Herstellung von regenerierter Cellulose entwickelt. Als Lösungsmittel wurden u.a. nichtderivatisierende Lösungsmittel wie Lithiumchlorid/Dimethylacetamid (DMAc), N-Methylmorpholin-N-Oxid (NMMO, Lyocell-Verfahren), Alkali/Harnstoff oder Thioharnstoff verwendet. Neben ionischen Flüssigkeiten, welche kein Wasser tolerieren, werden weiterhin wasserhaltige Lösungsmittelgemische eingesetzt, z.B. Natriumhydroxid (NaOH) zusammen mit hochtoxischem Kohlenstoffdisulfid (CS₂). Die meisten Lösungsmittel weisen jedoch nachteilige Eigenschaften wie hohe Toxizität oder hohe Flüchtigkeit auf und/oder sind kostspielig. Vorteilhafter sind dagegen Elektrolytlösungen, z.B. von quaternären Oniumhydroxiden wie Tetrabutylammoniumhydroxid (TBAH) oder Tetrabutylphosphoniumhydroxid (TBPH), welche eine geringe Toxizität und damit bessere Umweltfreundlichkeit aufweisen und ein unproblematisches Handling ermöglichen.

Membranen werden standardmäßig über ein Einbringen von Cellulosefilmen in Anti-Lösungsmittel oder durch Verdampfen des Lösungsmittels hergestellt. Mit Ammonium-basierten Elektrolyten wie TBAH können Cellulosefilme durch "Altern" (während einer bestimmten längeren Zeitperiode) auf einer PTFE-Oberfläche erhalten werden. Auf anderen Oberflächen (z.B. Glas) können diese Filme nicht abgelöst werden.

Ein Verfahren zum Herstellen von regenerierter Cellulose mittels phosphonium-basierten Elektrolyten wie TBPH wird in der US 2014/0212670 A1 offenbart. Darin wird Cellulose in der Form von "flakes" oder Fiber, Film, Granulat oder Partikeln durch Verwenden von Lösungsmitteln ausgefällt, die leichter flüchtig sind als das beim Lösen verwendete Lösungsmittel. Dabei werden Wasser und TBPH verdrängt. In der Praxis entstehen nach Untersuchungen der Anmelder jedoch nur feine Pulver aus regenerierter Cellulose. Es besteht die Aufgabe, ein zuverlässiges Verfahren zum Bereitstellen von regenerierten Polysacchariden in verschiedenen Formen und Produkten zu entwickeln.

Diese Aufgabe wird durch ein Verfahren mit den Merkmalen gemäß Anspruch 1 gelöst. Weitere vorteilhafte Ausführungsformen und Ausgestaltungen der Erfindung ergeben sich aus den Neben- und Unteransprüchen, den Figuren und den Ausführungsbeispielen. Die Ausführungsformen der Erfindung können in vorteilhafter Weise miteinander kombiniert werden.

Ein erster Aspekt der Erfindung betrifft ein Verfahren zum Herstellen eines festen regenerierten Polysaccharids, umfassend die Schritte:
- S1) Bereitstellen eines Polysaccharids,
- S2) Lösen des Polysaccharids in mindestens einem elektrolytischen Lösungsmittel, wobei als elektrolytisches Lösungsmittel ein quaternäres Oniumhydroxid in einem Gehalt von etwa 40 - 80 Gew.% in Wasser verwendet wird,
- S3) Ausfällen des Polysaccharids in gelierter Form durch Kontaktieren der Polysaccharid-Lösung mit einem elektrophilen Reagenz, wobei als elektrophiles Reagenz mindestens ein zyklisches organisches Carbonat, oder mindestens ein Polymer eines zyklischen organischen Carbonats, eingesetzt werden,
- S4) Waschen des regenerierten Polysaccharids.

Der Begriff "regeneriertes Polysaccharid" bezeichnet ein Polysaccharid, welche gelöst und wieder ausgefällt wurde. Dabei wird durch Quellungs- und Lösungsvorgänge das Kristallgitter des natürlichen Polysaccharids verändert, wobei die molekulare Struktur des Polysaccharids nicht verändert wird.

Unter dem Begriff "gelierte Form" wird im Sinne dieser Erfindung eine erstarrte Form, auch als verfestigte Form bezeichnet, verstanden. In dem erfindungsgemäßen Verfahren wird in Schritt S3 in Feststoff gebildet.

In dem erfindungsgemäßen Verfahren wird zur Ausfällung vorteilhaft ein elektrophiles Reagenz verwendet. Dabei wird jedoch nicht das Lösungsmittel ausgetauscht (wie es standardmäßig in den industriellen Prozesse oder in US 2014/ 212 670 A1 erfolgt), sondern das Polysaccharid wird durch eine Reaktion des elektrophilen Reagenzes mit den Hydroxid-Ionen des Lösungsmittels unmittelbar ausgefällt. Beim Lösen des Polysaccharids werden Wasserstoffbrückenbindungen zwischen dem Polysaccharid und, im Falle der Verwendung von TBPH als Lösungsmittel, den Ionen [TBP]⁺ und [OH]⁻ gebildet, die bei Kontakt mit dem elektrophilen Reagenz durch Reaktion mit den Hydroxidgruppen wieder aufgelöst werden. Es erfolgt keine Reaktion des Reagenzes mit dem Polysaccharid. Das Verfahren ermöglicht vorteilhaft eine einfache und sekundenschnelle Herstellung von Pulvern und Filmen, ohne dass toxische Chemikalien verwendet werden. Damit ist das Verfahren zeit- und materialökonomisch und zudem umweltfreundlich. Die durch das Verfahren hergestellten regenerierten Polysaccharide sind von hoher Reinheit. Damit wird ein einfach und schnell auszuführendes Verfahren bereitgestellt, in dem ungiftige, recycelbare und wasser-tolerante Chemikalien verwendet werden, um regenerierte Polysaccharide herzustellen.

Die zu regenerierenden Polysaccharide können in mikrokristalliner Form, aber auch in jeder anderen Form, z.B. künstlich, amorph oder aus Biomasse hergestellt, bereitgestellt werden.

Das Polysaccharid kann beispielsweise Cellulose, Stärke, Chitin, Chitosan oder Glykogen sein.

Besonders bevorzugt wird in dem Verfahren als Polysaccharid Cellulose verwendet. Cellulose und ihre Derivate können vielseitig eingesetzt werden. Das Verfahren ermöglicht vorteilhaft ein Herstellen von regenerierter Cellulose von hoher Qualität. Mit dem Verfahren hergestellte Filme zeigen eine extrem hohe Homogenität innerhalb des Films sowie an der Oberfläche, die sehr glatt ist. Beides deutet auf ein gleichmäßiges und schnelles Durchdringen der gelösten Cellulose durch das organische Carbonat hin.

Die zu regenerierende Cellulose kann in mikrokristalliner Form, aber auch in jeder anderen Form von Cellulose, z.B. künstlich, amorph oder aus Biomasse hergestellt, bereitgestellt werden.

In dem Verfahren wird als elektrolytisches Lösungsmittel ein quaternäres Oniumhydroxid in einem Gehalt von etwa 40 - 80 Gew.% (Gewichtsprozent) in Wasser verwendet. Bevorzugt wird dabei mindestens ein phosphoniumhaltiges und/oder ein ammoniumhaltiges Oniumhydroxid verwendet. Besonders bevorzugt wird dabei TBPH verwendet. Es kann auch TBAH verwendet werden, wobei die Menge des gelösten Polysaccharids geringer ist und das Lösen länger dauert als bei TBPH.

Das quaternäre Oniumhydroxid kann beispielsweise ein quaternäres Oniumhydroxid, wie es in der US 2014/ 212 670 A1 beschrieben ist, sein.

Das quaternäre Oniumhydroxid kann beispielsweise ein Tetraalkylphosphoniumhydroxid, dessen Alkylanteile 2 bis 8 Kohlenstoffatome aufweisen, wie beispielsweise Tetraethylphosphoniumhydroxid, Tetrapropylphosphoniumhydroxid, Tetrabutylphosphoniumhydroxid, Tetrapentylphosphoniumhydroxid oder Tetrahexylphosphoniumhydroxid sein. Das quaternäre Oniumhydroxid kann beispielsweise Tetraphenylphosphoniumhydroxid sein. Das quaternäre Oniumhydroxid kann beispielsweise ein substituiertes oder unsubstituiertes Alkyltriphenylphosphoniumhydroxid wie beispielsweise Ethyltriphenylphosphoniumhydroxid, Butyltriphenylphosphoniumhydroxid, Pentyltriphenylphosphoniumhydroxid, 2-Dimethylaminoethyltriphenylphosphoniumhydroxid oder Methoxymethyltriphenylphosphoniumhydroxid sein.

Das quaternäre Oniumhydroxid kann beispielsweise ein Tetraalkylammoniumhydroxid, dessen Alkylanteile 2 bis 6 Kohlenstoffatome aufweisen, wie beispielsweise Tetraethylammoniumhydroxid, Tetrapropylammoniumhydroxid, Tetrabutylammoniumhydroxid oder Tetrapentylammoniumhydroxid sein.

Das quaternäre Oniumhydroxid wird beispielsweise in einem Gehalt von 50 Gew.% in Wasser verwendet.

Das Polysaccharid kann in der Lösung beispielsweise einen Anteil von 20 Gew.% aufweisen.

Zum Lösen des Polysaccharids kann die Polysaccharid-Lösung beispielsweise für etwa 30 min bei Raumtemperatur (23°C) gerührt werden.

Vorzugsweise wird in Schritt S2 ein zusätzliches Lösungsmittel verwendet. Das besagte Lösungsmittel kann also zusätzlich zu dem mindestens einen elektrolytischen Lösungsmittel eingesetzt werden. Das zusätzliche Lösungsmittel kann dabei vor dem Lösen des Polysaccharids, gleichzeitig mit dem elektrolytischen Lösungsmittel oder nach dem Lösen des Polysaccharids hinzugefügt werden. Das Verhältnis des zusätzlichen Lösungsmittels zu dem elektrolytischen Lösungsmittel kann beispielsweise 1:1 sein. Besonders bevorzugt wird Dimethylsulfoxid (DMSO) als zusätzliches Lösungsmittel verwendet. Die Zugabe von DMSO verringert die Viskosität der regenerierten Polysaccharidlösung und verbessert die Streichfähigkeit der Polysaccharidlösung beim Herstellen von Filmen. Auch wird die Koagulation beschleunigt. Die unter Verwenden von DMSO hergestellten Filme sind flexibler als ohne DMSO und zudem transparent.

In dem Verfahren wird als elektrophiles Reagenz (i) mindestens ein organisches Carbonat, oder (ii) eine Mischung aus verschiedenen organischen Carbonaten, oder (iii) mindestens ein Polymer eines organischen Carbonats, oder (iv) eine Mischung aus verschiedenen Polymeren organischer Carbonate, oder (v) eine Mischung aus mindestens einem organischen Carbonat und mindestens einem Polymer eines organischen Carbonats eingesetzt. Organische Carbonate sind im Sinne der Erfindung besonders effektiv. Organische Carbonate bewirken ein unmittelbares Erstarren der Polysaccharidlösung, ohne die übergreifende Struktur zu zerstören. Wenn die Polysaccharidlösung mit dem organischen Carbonat in Verbindung kommt, kommt es zu einer chemischen Reaktion zwischen dem Hydroxidanion des Lösungsmittels und dem organischen Carbonat unter Freisetzung eines Diols sowie von Kohlendioxid, das z.T. in Form von Carbonat gelöst ist. Das Lösungsmittel und das Diol können theoretisch in nachfolgenden Schritten recycelt und wiederverwendet werden. Es erfolgt keine Reaktion mit dem Polysaccharid. Es bildet sich ein regeneriertes Polysaccharid aus.

Das organische Carbonat kann beispielsweise Propylencarbonat, Vinylethylencarbonat, Butylcarbonat oder Ethylencarbonat sein.

Das organische Carbonat kann ein zyklisches oder ein nicht-zyklisches organisches Carbonat sein. Das zyklische organische Carbonat kann beispielsweise Propylencarbonat, Vinylethylencarbonat, Butylcarbonat, Ethylencarbonat oder Vinylcarbonat sein. Das nicht-zyklische organische Carbonat kann beispielsweise Dimethylcarbonat, Diethylcarbonat, Dibutylcarbonat, Dipropylcarbonat, Dibenzylcarbonat, Diphenylcarbonat oder tert-Butyl-Phenylcarbonat sein.

Vorzugsweise wird in dem Verfahren als organisches Carbonat Propylencarbonat verwendet. Propylencarbonat ist besonders vorteilhaft, weil es ein bei Raumtemperatur flüssiges, nachhaltig aus Biomasse herstellbares und daher einfach verwendbares Carbonat ist. Propylencarbonat ist zudem günstig.

Das Polymer eines organischen Carbonats kann beispielsweise 2-1000000 Monomere aufweisen.

Das Polymer eines organischen Carbonats kann beispielsweise Polypropylencarbonat sein.

Die Mischung aus mindestens einem organischen Carbonat und mindestens einem Polymer eines organischen Carbonats kann beispielsweise eine Mischung aus Propylencarbonat und Polypropylencarbonat sein.

Feste organische Carbonate werden vorzugsweise vor ihrer Verwendung in dem Verfahren gelöst, beispielsweise in DMSO. DMSO ist hier besonders geeignet. Dies gilt auch für die Polymere organischer Carbonate. Die Polymere sind bei Raumtemperatur fest.

Vorzugsweise wird in dem Verfahren mindestens ein organisches Carbonat oder eine Mischung aus verschiedenen organischen Carbonaten eingesetzt.

Das elektrophile Reagenz wird in Schritt S3 in einer Konzentration von 10 - 100%, insbesondere in einer Konzentration von 80 - 100% eingesetzt. Schritt S3 wird vorzugsweise bei einer Temperatur im Bereich von 0 - 100°C für 0,01 - 100 Stunden durchgeführt, insbesondere bevorzugt bei 23°C für 0,01 - 10 min, weiter bevorzugt bei 23°C für 0,01 - 6 min. Damit funktioniert das Verfahren vorteilhaft bei Raumtemperatur. Das Verfahren ist zudem sehr schnell.

Die in Schritt S4 stattfindende Reinigung des regenerierten Polysaccharids, die vorzugsweise mit Wasser erfolgt, ermöglicht die effektive Entfernung von Verunreinigungen, insbesondere von wasserlöslichen Verureinigungen, sowie von gebildeten organischen Verbindungen (Propylenglycol) und von Lösungsmittel. Dabei wird vorteilhaft eine besonders hohe Reinheit sowie eine sehr gleichmäßige homogene Struktur des regenerierten Polysaccharids erreicht.

In einer bevorzugten Ausführungsform des Verfahrens wird das regenerierte Polysaccharid als Film (auch als Folie bezeichnet) hergestellt, indem die Polysaccharidlösung nach Schritt S2 in einem zusätzlichen Schritt S2a auf einer Fläche mit einem Ausstreichmittel definierter Höhe, z.B. einem Rakel, ausgestrichen wird. Dabei wird eine Polysaccharid-Lösungsmittel-Schicht mit einer definierten und gleichmäßigen Schichtdicke erhalten. Nach dem Kontakt mit dem organischen Carbonat wie beispielsweise Propylencarbonat in Schritt S3, z.B. durch Eintauchen in ein Propylencarbonat-Bad, erfolgt eine Umwandlung der Schicht in einen Film. Dabei werden nichttransparente, weißliche Filme erhalten. Wie oben beschrieben, können durch Zugabe von DMSO transparente Filme hergestellt werden.

Es konnte gezeigt werden, dass die mittels des Verfahrens hergestellte Filme ein Oberflächenpotential (Zeta-Potential) in einem Bereich von pH 5,0 - 9,0 von im Durchschnitt -20 mV aufweisen.

Durch das Einbringen des elektrophilen Reagenz und das Herauslösen von Lösungsmittel aus der Polysaccharidlösung bildet sich in mit dem Verfahren hergestellten Filmen aus regeneriertem Polysaccharid eine durchlässige (poröse), mikrofibrillierte Struktur aus. Es konnte gezeigt werden, dass die Eigenschaften dieser Filme mit herkömmlich hergestellten Membranen vergleichbar sind.

Die Filme können in neutralen, leicht basischen oder leicht azidischen Medien gelagert werden. Es konnte gezeigt werden, dass die Druckstabilität der Filme bei derartiger Lagerung erhalten bleibt. Dazu wurde die Druckstabilität der Filme zwischen 1 und 3 bar in einem Durchflussreaktor überprüft.

Die Filme können beispielsweise in Wasser, Ethanol oder Aceton gelagert werden. Vorzugsweise werden die Filme in Wasser gelagert.

In einer weiteren bevorzugten Ausführungsform des Verfahrens wird das regenerierte Polysaccharid in granulierter Form hergestellt, indem es nach Schritt S4 in einem zusätzlichen Schritt S4a mechanisch zerkleinert wird. Durch Zerkleinern des nach Kontaktieren der Polysaccharidlösung mit dem organischen Carbonat wie beispielsweise Propylencarbonat entstehenden Feststoffes aus regeneriertem Polysaccharid mit nachfolgendem Waschvorgang kann hochreines Polysaccharid-Material als Granulat, z.B. in Pulverform, erhalten werden.

Ein zweiter Aspekt der Erfindung betrifft ein regeneriertes Polysaccharid, das durch das erfindungsgemäße Verfahren gemäß der oben beschriebenen Ausführungsformen hergestellt wurde und als Film bereitgestellt wird. Das regenerierte Polysaccharid ist vorzugsweise regenerierte Cellulose.

Das regenerierte Polysaccharid wird als Film bereitgestellt. Vorzugsweise wird ein Film aus regenerierter Cellulose bereitgestellt. Die Filme zeigen eine hohe Homogenität innerhalb des Films und an der Oberfläche. Die Oberfläche ist sehr glatt. Die Abstände (Poren) zwischen den Fibrillen (Fasern) sind sehr klein, bevorzugt 10-100 nm, und entsprechend selektiv für bestimmte Partikelgrößen. Die erfindungsgemäßen Filme können beispielsweise als Folien oder als Membranen für die selektive Aufreinigung von Trinkwasser genutzt werden. Darüber hinaus können selektiv negativ geladene Ionen von positiv geladenen Ionen getrennt werden. Weiterhin können die Fime zum Herstellen von Lagen und Nanoröhren verwendet werden.

Ebenfalls bevorzugt wird das regenerierte Polysaccharid als Granulat bereitgestellt. Granulate, z.B. in Pulverform, können beispielsweise als Zusatz in Ernährungs- oder medizinischen Präparaten verwendet werden, in der bauchemischen Industrie oder keramischen Anwendungen.

Die erfindungsgemäß hergestellten Filme und Granulate aus regenerierter Cellulose wurden durch Verfahren wie Fourier-Transform-Infrarotspektrometrie, Kernspinresonanzspektroskopie, Röntgendiffraktion, thermische Analyse, Rasterkraftmikroskopie, Rasterelektronenmikroskopie, Transmissionselektronenmikroskopie, UV/VIS-Spektroskopie und Größenausschluss-Chromatografie charakterisiert.

Ein dritter Aspekt der Erfindung betrifft ein Produkt aus einem erfindungsgemäß regenerierten Polysaccharid. Besagte Produkte sind beispielsweise Membranen, Folien, Lagen oder Nanoröhren oder Verbindungen mit anderen Materialen.

Die Vorteile des durch das Verfahren hergestellten regenerierten Polysaccharids und des Produkts aus dem regenerierten Polysaccharid entsprechen den Vorteilen des Verfahrens, soweit sie nicht auf rein verfahrenstechnische Aspekt beschränkt sind.

Offenbart ist ferner ein Verfahren zum Herstellen eines festen regenerierten Polysaccharids, umfassend die Schritte:
- S1) Bereitstellen eines Polysaccharids,
- S2) Lösen des Polysaccharids in mindestens einem elektrolytischen Lösungsmittel,
- S3) Ausfällen des Polysaccharids in gelierter Form durch Kontaktieren der Polysaccharid-Lösung mit einem elektrophilen Reagenz mit der Formel 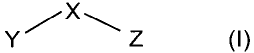 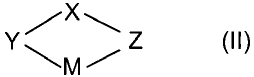 oder der Formel
   oder mit einer Mischung aus elektrophilen Reagenzien mit den Formeln I und/oder II,
   wobei X eine C=O, C=S, C=NR Funktionalität ist und Y und Z gleich oder verschieden sind und unabhängig voneinander ausgewählt sind und aus O, NH, NR, S, CR Gruppen bestehen, wobei R Wasserstoff und/oder ein substituierter oder unsubstituierter Kohlenwasserstoffrest ist, und M eine Brücke bestehend aus 0-20 Kohlenstoffatomen und linearen oder verzweigten, substituierten oder unsubstituierten Kohlenwasserstoffresten ist,
- S4) Waschen des regenerierten Polysaccharids.

Der unter R subsumierte substituierte oder unsubstituierte Kohlenwasserstoffrest ist insbesondere ein Alkyl- oder Arylrest, z.B. ein Alkylrest mit 1 bis 20 Kohlenstoffatomen oder mit 1 bis 8 Kohlenstoffatomen. Vorzugsweise ist R ein Methyl-, Ethyl- oder n-Propylrest.

Zur Verwendung als elektrophile Reagenzien ausdrücklich ausgenommen sind Verbindungen, die in der Druckschrift US 2014/ 212 670 A1 zum Ausfällen von regenerierter Cellulose offenbart wurden. Dies betrifft besonders Alkohole mit ein bis vier Kohlenstoffatomen, z.B. Methanol, Ethanol und 2-Propanol sowie Ketone wie Azeton. Mit anderen Worten ist die Verwendung dieser Verbindungen vom Offenbarungsbereich von Ziffer 1 ausgenommen.

Unter einem "elektrolytischen Lösungsmittel" versteht man im Sinne dieser Offenbarung einen gelösten Feststoff aus Ionenkristallen bestehend aus Hydroxid-Ionen als negativ geladenen Anionen und positiv geladenen Kationen. Vorzugsweise wird in dem offenbarten Verfahren als elektrolytisches Lösungsmittel ein quaternäres Oniumhydroxid in einem Gehalt von etwa 40 - 80 Gew.% (Gewichtsprozent) in Wasser verwendet. Weiterhin ist es auch möglich, dass andere protische und aprotische Lösungsmittel toleriert werden, was zu einer Verbesserung der Fließeigenschaft und damit Verarbeitbarkeit führen kann.

Die Erfindung wird anhand der Figuren näher erläutert. Es zeigen
- Figur 1: ein Fließdiagramm einer allgemeinen Ausführungsform des erfindungsgemäßen Verfahrens zum Herstellen von regenerierter Cellulose.
- Figur 2: ein Fließdiagramm einer weiteren Ausführungsform des erfindungsgemäßen Verfahrens zum Herstellen eines Films.
- Figur 3: ein Fließdiagramm einer Ausführungsform des erfindungsgemäßen Verfahrens zum Herstellen eines Granulats.
- Figur 4: ein Diagramm zur Analyse der Permeabilität des gemäß Fig. 2 hergestellten regenerierten Cellulose-Films.
- Figur 5: ein Diagramm (¹³C-Kernspinresonanzspekroskopie) zur Analyse der Qualität und Struktur der regenerierten Cellulose des gemäß Fig. 2 hergestellten Films. K. m. Cell. - Kommerzielle mikrokristalline Cellulose.
- Figur 6: Diagramme zur Analyse der Porengröße des gemäß Fig. 2 hergestellten regenerierten Cellulose-Films.
- Figur 7: Diagramme zur Analyse der Struktur der regenerierten Cellulose des gemäß Fig. 3 hergestellten Granulats mittels A) FT-IR Spektroskopie, B) Röntgenstrahldiffraktion und C) Kernspinresonanzspektroskopie.
- Figur 8: Diagramme zur vergleichenden Analyse der Struktur der regenerierten Cellulose von unter Verwendung von vier verschiedenen organischen Carbonaten gemäß Fig. 3 hergestellten Granulaten mittels A) FT-IR und B) Röntgenstrahldiffraktion.
- Figur 9: eine lichtmikroskopische Aufnahme eines Querschnitts eines gemäß Fig. 2 hergestellten regenerierten Cellulose-Films.
- Figur 10: eine transmissionselektronenmikroskopische Aufnahme eines Querschnitts eines gemäß Fig. 2 hergestellten regenerierten Cellulose-Films.

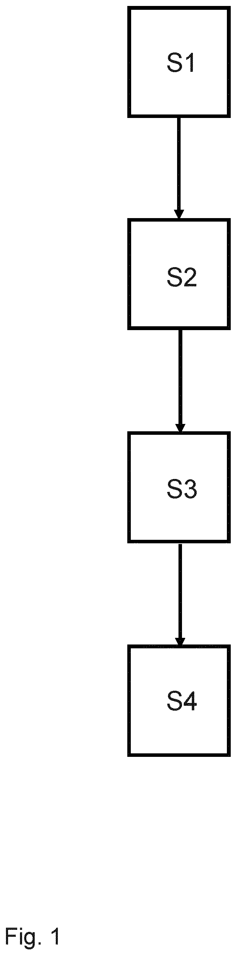

In einer allgemeinen Ausführungsform des erfindungsgemäßen Verfahrens gemäß Fig. 1 wird regenerierte Cellulose hergestellt. Dazu wird in einem ersten Schritt S1 natürliche Cellulose in mikrokristalliner Form bereitgestellt. Alternativ kann aber die Cellulose auch in jeder anderen möglichen Form von Cellulose, z.B. künstlich, amorph oder aus Biomasse hergestellt, bereitgestellt werden. In einem zweiten Schritt S2 werden in einem geeigneten Gefäß 20 Gewichtsprozent (Gew.-%) (200 mg) der mikrokristallinen Cellulose in einer 50%igen wässrigen Lösung von TBPH (1 ml) gelöst. Dabei wird die entstehende Cellulose-Lösung für etwa 30 min bei Raumtemperatur (23°C) gerührt. In einem dritten Schritt S3 wird die Flüssigkeit zur Koagulation mit Propylencarbonat versetzt. Dabei erfolgt eine sofortige Umwandlung der Cellulose-Lösungsmittel-Schicht in regenerierte Cellulose. In einem vierten Schritt S4 wird die regenerierte Cellulose mit Wasser gewaschen, um Lösungsmittel und gebildete organische Verbindungen zu entfernen. Es wird hochreine regenerierte Cellulose erhalten.

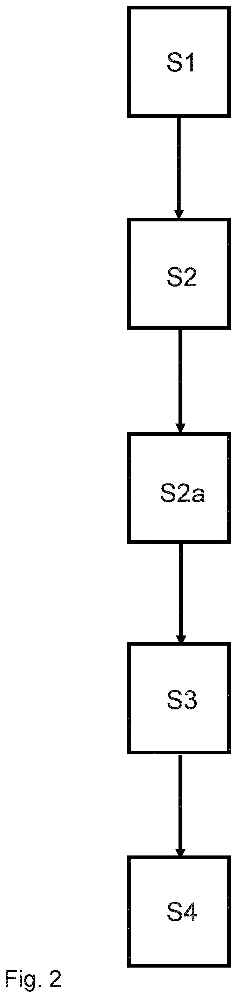

In einer Ausführungsform des erfindungsgemäßen Verfahrens zur Herstellung von regenerierten Cellulosefilmen/-folien gemäß Fig. 2 wird das Verfahren analog zu Fig. 1 mit dem Unterschied ausgeführt, dass in einem zusätzlichen Schritt S2a die klare Lösung z.B. mittels einer Rakel auf der Glasplatte ausgestrichen wird. Dabei wird eine bestimmte voreingestellte Dicke der Cellulose-Lösungsmittel-Schicht erhalten (z.B. 300 µm). In einem dritten Schritt S3 wird die gegossene Flüssigkeit zur Koagulation in ein Propylencarbonat-Bad getaucht. Dabei erfolgt eine sofortige Umwandlung der Cellulose-Lösungsmittel-Schicht in einen Film aus regenerierter Cellulose. In einem vierten Schritt S4 wurden die regenerierten Cellulosefilme mit Wasser gewaschen, um Lösungsmittel und gebildete organische Verbindungen zu entfernen und einen hochreinen Cellulosefilm zu erhalten. Es erfolgte eine sofortige Ablösung von der Glasplatte. Die Filme werden bis zu einer Verwendung in Wasser gelagert.

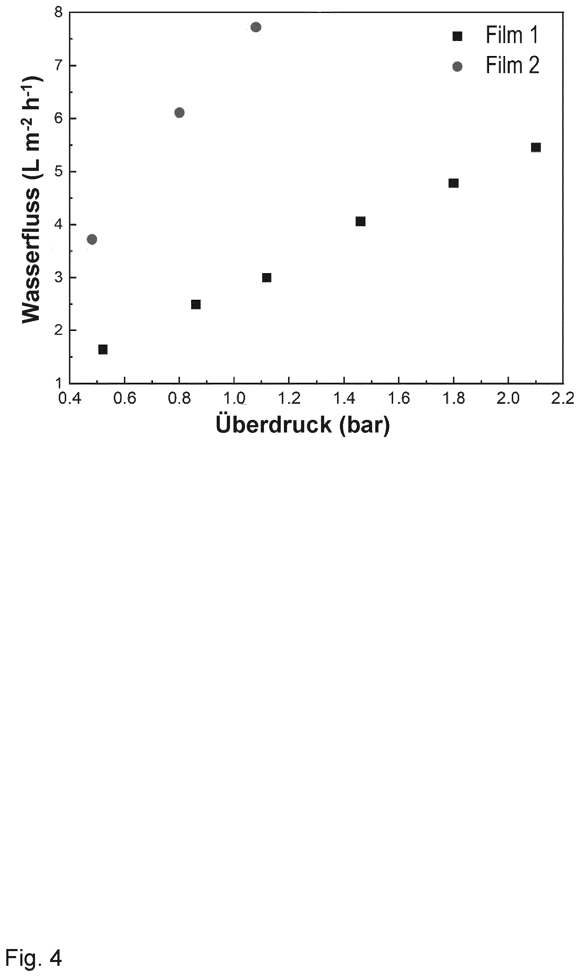

Die optischen Eigenschaften ändern sich bei dieser Umwandlung jedoch nicht; die Cellulosefilme sind weißlich und nicht transparent, so dass die Umwandlung der Cellulose-Lösungsmittel-Schicht in einen Cellulosefilm nicht visuell nachvollzogen werden kann. In einer weiteren Ausführungsform des erfindungsgemäßen Verfahrens wird in Schritt S2 DMSO (bevorzugtes Verhältnis Lösungsmittel : DMSO 1 : 1) als zusätzliches Lösungsmittel der gelösten Cellulose hinzugefügt. Dadurch wird in Schritt S3 ein transparenter Cellulosefilm hergestellt. Die Umwandlung kann ebenfalls nicht visuell erkannt werden. Die Verwendung von DMSO hat auch einen Einfluss auf die Permeabilität der Filme, wie durch einen Wasserdurchflusstest in als Membranen verwendeten Filmen gemäß Fig. 4 gezeigt werden kann. Der Wasserdurchfluss hängt prinzipiell von der Größe und Verteilung von Poren in der Membran ab. Dabei wurde eine erste Membran ohne DMSO (RC1) und eine zweite Membran mit DMSO (RC2) hergestellt. In dem ersten Film RC1 erhöhte sich die Wasserpermeabilität druckabhängig von 1,6 auf 5,4 L*m⁻²*h⁻¹ im Bereich eines Drucks von 0,5 bis 2,1 bar (quadratische Datenmarkierungen). In dem zweiten Film RC2 erhöhte sich die Wasserpermeabilität druckabhängig von 3,7 auf 7,8 L*m⁻²*h⁻¹ im Bereich eines Drucks von 0,5 bis 1,1 bar (runde Datenmarkierungen). Die ersichtliche größere Permeabilität zeigt einen offensichtlichen verdünnenden Effekt des DMSO auf die regenerierte Cellulose.

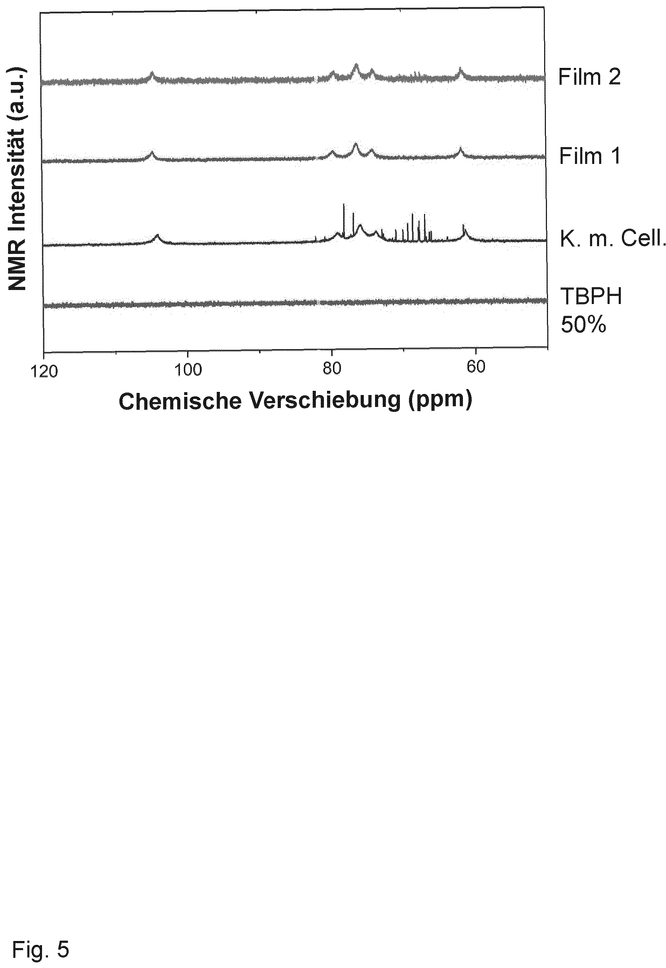

In Fig. 5 wird die Aufreinigungswirkung des neuen Prozesses sowie die verbesserte Qualität der hergestellten Filme aufgezeigt. Die Abkürzung a.u. steht für willkürliche Einheiten (englisch "arbitrary units"). Die Verunreinigungen (scharfe Signale) sind in den Filmen nicht enthalten. Weiterhin entspricht die chemische Struktur der Membranen RC2 (Film 2, oberster Graph) und RC1 (Film 1, zweiter Graph von oben) der von kommerzieller mikrokristalliner Cellulose (als K. m. Cell. abgekürzt, zweiter Graph von unten). Der unterste Graph bezieht sich auf das Lösungsmittel (TBPH, 50%).

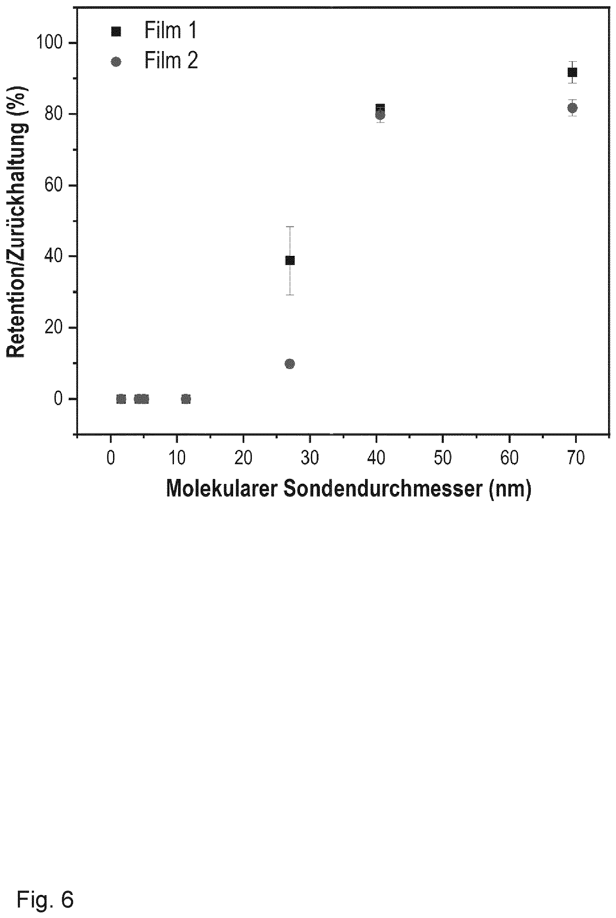

In Fig. 6 ist die Porenverteilung beider Filme dargestellt. Die Poren haben eine Größe von 10-70 nm und sind damit wesentlich kleiner als die von kommerziell erhältlichen regenerierten Cellulosemembranen (200-500 nm).

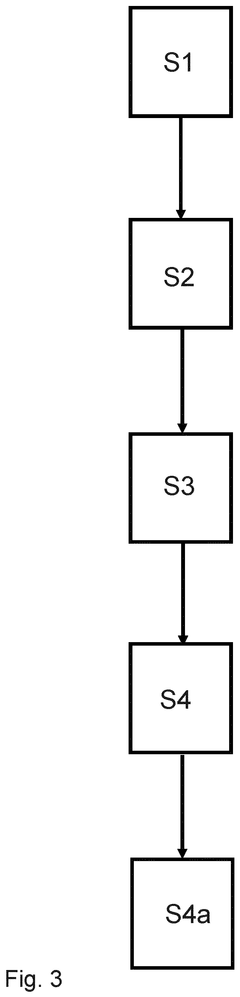

In einer weiteren Ausführungsform des erfindungsgemäßen Verfahrens gemäß Fig. 3 wird ein Granulat aus regenerierter Cellulose hergestellt. Dabei werden die Schritte S1 und S2 wie in dem gemäß Fig. 1 beschriebenen Verfahren ausgeführt. Zu der Celluloselösung wird in Schritt S3 direkt Propylencarbonat hinzugefügt (bevorzugt ein 10:1 Überschuss von Propylencarbonat). Es erfolgt ein sofortiges Gelieren bzw. Erstarren der regenerierten Cellulose. Die erstarrte regenerierte Cellulose kann in Schritt S4 mit Wasser gewaschen werden, z.B. durch mehrfaches Dekantieren des Überstands oder Zentrifugieren, nachdem sich die Cellulose am Boden des die Cellulose und das Lösungsmittel enthaltenen Gefäßes absetzt. Die regenerierte Cellulose wird bevorzugt bei 30-100°C getrocknet und bis zur weiteren Verwendung als Granulat gelagert. Optional kann das Granulat in Schritt S4a mechanisch zerkleinert werden, z.B. durch ein Pistill oder einen Mörser. Die Größe der in dem zu Abb. 3 beschriebenen Verfahren entstehenden Granulatpartikel kann variiert werden, so dass ein Pulver oder ein gröberes Granulat hergestellt werden kann. Die Größe des Granulates kann durch entsprechende Zerkleinerungsgeräte und die Intensität der Zerkleinerung (einwirkende Kraft, Dauer der Einwirkung) angepasst werden.

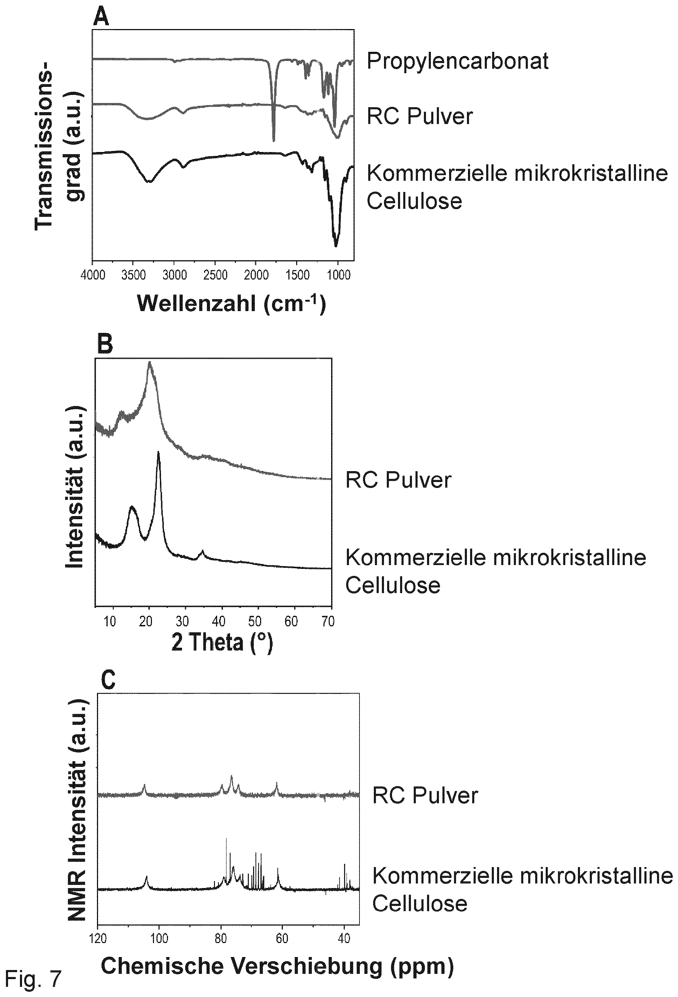

Das hergestellte Granulat wurde strukturell untersucht. Es konnte gezeigt werden, dass die regenerierte Cellulose durch das Propylencarbonat nicht chemisch modifiziert wurde, hier also tatsächlich keine chemische Reaktion der Cellulose mit dem Propylencarbonat stattfindet. Die Analyse durch FourierTransformation-Infrarotspektrometrie (FT-IR) zeigt, dass kein Propylencarbonat in die Cellulosestruktur eingebaut wurde (Fig. 7A). Dabei indiziert die obere Linie Propylencarbonat, die mittlere die regenerierte Cellulose und die untere natürliche mikrokristalline Cellulose. Die gelöste Cellulose wird also ohne Änderungen in der chemischen Struktur regeneriert. Eine Analyse des Granulats durch Röntgendiffraktion (*X-Ray diffraction,* XRD) zeigt, dass eine Umwandlung der makroskopischen Struktur aufgetreten ist. Neu auftretende Reflektionen bei 12,1° und 20,6° in dem oberen Graphen (regenerierte Cellulose) im Vergleich zum unteren Graphen (natürliche Cellulose, kristalline Cellulose) deuten auf das Entstehen der Cellulose-II-Struktur (regenerierte Cellulose) hin (Fig. 7B). Auch eine Analyse durch Kernspinresonanz (*nuclear magnetic resonance,* NMR) zeigte keine Änderungen in der chemischen Struktur, wie aus dem ähnlichen Verlauf des oberen Graphen (regenerierte Cellulose) im Vergleich zum unteren Graphen (natürliche Cellulose) zu erkennen ist (Fig. 7C). Die Abkürzung a.u. steht jeweils für willkürliche Einheiten (englisch "arbitrary units").

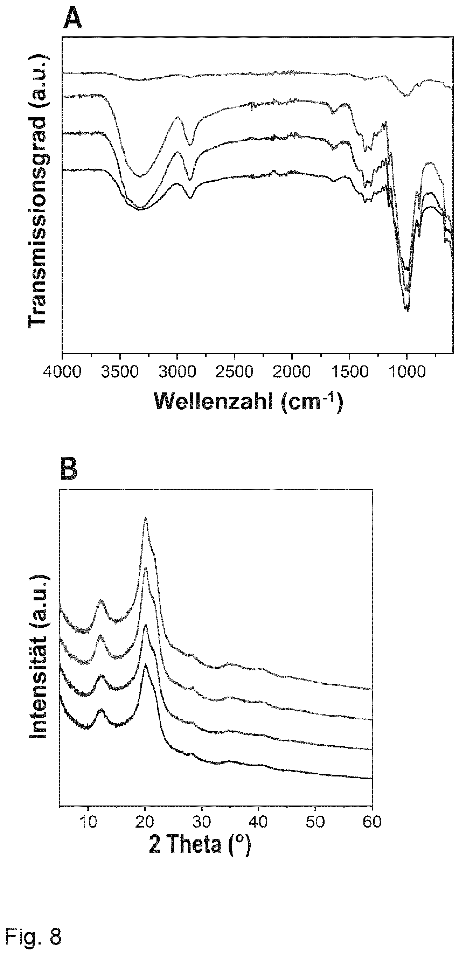

Alternativ zu dem verwendeten Propylencarbonat können auch andere organische Carbonate verwendet werden, um regenerierte Cellulose zu erhalten (Fig. 8). Mittels FT-IR (Fig. 8A) und Röntgendiffraktion (Fig. 8B) wurde gezeigt, dass mit Vinylethylencarbonat (oberster Graph), Butylcarbonat (zweiter Graph von oben) und Ethylencarbonat (zweiter Graph von unten) regenerierte Cellulose mit derselben Struktur erhalten wird wie mit Propylencarbonat (unterster Graph). Die Abkürzung a.u. steht jeweils für willkürliche Einheiten (englisch "arbitrary units").

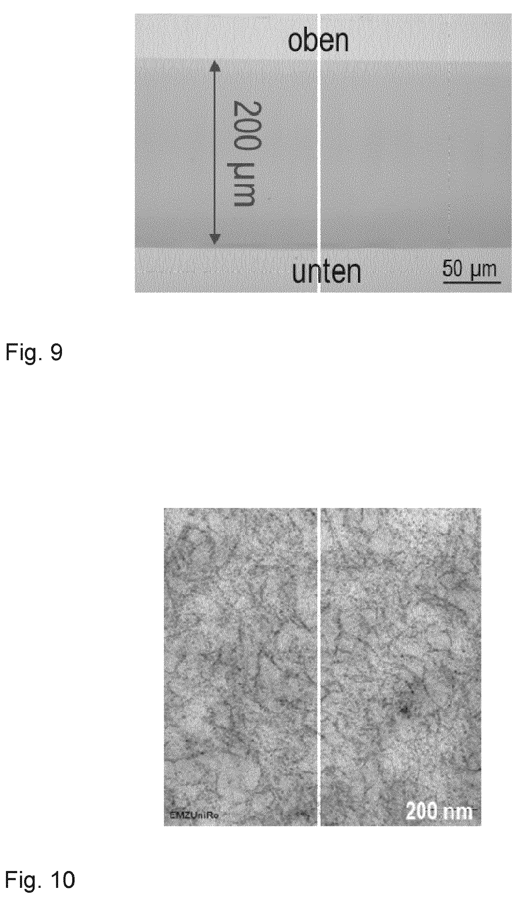

In Fig. 9 ist eine lichtmikroskopische Aufnahme eines Querschnitts eines gemäß Fig. 2 hergestellten Films aus regenerierter Cellulose gezeigt. Die Aufnahme zeigt einen Film (Folie), der ohne DMSO als zusätzliches Lösungsmittel hergestellt wurde (RC1). Die Dicke des Films beträgt 200 µm. Die Aufnahme zeigt die hervorragende Homogenität innerhalb des Films. Die Aufnahme zeigt zudem, dass der Film keine Luftblasen aufweist.

In Fig. 10 ist eine hochauflösende transmissionselektronenmikroskopische Aufnahme (TEM-Aufnahme) eines Querschnitts eines gemäß Fig. 2 hergestellten Films aus regenerierter Cellulose gezeigt. Die Aufnahme zeigt einen Film (Folie), der ohne DMSO als zusätzliches Lösungsmittel hergestellt wurde (RC1). Die mikrofibrillare Struktur wurde mittels Uranylacetat und Bleicitrat sichtbar gemacht.

Die hergestellten Materialien aus regenerierter Cellulose können Anwendungen in der Filtertechnologie finden. Zum Beispiel können die hergestellten Filme als Membranen für die selektive Aufreinigung von Trinkwasser verwendet werden.

## Patentansprüche

1. Verfahren zum Herstellen eines festen regenerierten Polysaccharids, umfassend die Schritte:
- S1) Bereitstellen eines Polysaccharids,
- S2) Lösen des Polysaccharids in mindestens einem elektrolytischen Lösungsmittel, wobei als elektrolytisches Lösungsmittel ein quaternäres Oniumhydroxid in einem Gehalt von etwa 40 - 80 Gew.% in Wasser verwendet wird,
- S3) Ausfällen des Polysaccharids in gelierter Form durch Kontaktieren der Polysaccharid-Lösung mit einem elektrophilen Reagenz, wobei als elektrophiles Reagenz mindestens ein zyklisches organisches Carbonat, oder mindestens ein Polymer eines zyklischen organischen Carbonats, eingesetzt werden,
- S4) Waschen des regenerierten Polysaccharids.

2. Verfahren nach Anspruch 1, wobei als Polysaccharid Cellulose verwendet wird.

3. Verfahren nach Anspruch 1 oder 2, wobei mindestens ein phosphoniumhaltiges und/oder mindestens ein ammoniumhaltiges Oniumhydroxid verwendet wird.

4. Verfahren nach Anspruch 3, wobei Tetrabutylphosphoniumhydroxid verwendet wird.

5. Verfahren nach Anspruch 3, wobei Tetrabutylammoniumhydroxid verwendet wird.

6. Verfahren nach einem der vorherigen Ansprüche, wobei in Schritt S2 ein zusätzliches Lösungsmittel verwendet wird.

7. Verfahren nach Anspruch 6, wobei Dimethylsulfoxid als zusätzliches Lösungsmittel verwendet wird.

8. Verfahren nach einem der vorherigen Ansprüche, wobei das elektrophile Reagenz in einer Konzentration von 80 - 100% eingesetzt wird.

9. Verfahren nach Anspruch 1, wobei als zyklisches organisches Carbonat Propylencarbonat, Vinylethylencarbonat, Butylcarbonat, Ethylencarbonat und/oder Vinylcarbonat verwendet wird.

10. Verfahren nach einem der vorherigen Ansprüche, wobei das regenerierte Polysaccharid als Film hergestellt wird, indem die Polysaccharidlösung nach Schritt S2 in einem zusätzlichen Schritt S2a auf einer Fläche ausgestrichen wird.

11. Verfahren nach einem der Ansprüche 1 - 10, wobei das regenerierte Polysaccharid in Pulver- oder granulierter Form hergestellt wird, indem es nach Schritt S4 in einem zusätzlichen Schritt S4a mechanisch zerkleinert wird.

12. Regeneriertes Polysaccharid, hergestellt durch ein Verfahren gemäß einem der Ansprüche 1 - 11, wobei das regenerierte Polysaccharid als Film bereitgestellt wird, und die Abstände zwischen den Fasern 10-100 nm betragen.

13. Produkt aus einem regenerierten Polysaccharid gemäß Anspruch 12.

## Claims

1. A process for producing a solid regenerated polysaccharide, comprising the steps of:
- S1) providing a polysaccharide,
- S2) dissolving the polysaccharide in at least one electrolytic solvent, wherein a quaternary onium hydroxide with a content of about 40-80% by weight in water is used as the electrolytic solvent,
- S3) precipitating the polysaccharide in gelated form by contacting the polysaccharide solution with an electrophilic reagent, wherein at least one cyclic organic carbonate, or at least one polymer of a cyclic organic carbonate are used as the electrophilic reagent,
- S4) washing the regenerated polysaccharide.

2. The process of claim 1, wherein cellulose is used as polysaccharide.

3. The process of claim 1 or 2, wherein at least one phosphonium-containing and/or at least one ammonium-containing onium hydroxide is used.

4. The process of claim 3, wherein tetrabutylphosphonium hydroxide is used.

5. The process of claim 3, wherein tetrabutylammonium hydroxide is used.

6. The process according to any one of the preceding claims, wherein an additional solvent is used in step S2.

7. The process of claim 6, wherein dimethyl sulfoxide is used as additional solvent.

8. The process according to any one of the preceding claims, wherein the electrophilic reagent is used at a concentration of 80 - 100%.

9. The process of claim 1, wherein propylene carbonate, vinyl ethylene carbonate, butyl carbonate, ethylene carbonate, and/or vinyl carbonate is used as cyclic organic carbonate.

10. The process according to any one of the preceding claims, wherein the regenerated polysaccharide is produced as a film by coating the polysaccharide solution after step S2 on a surface in an additional step S2a.

11. The process according to any one of claims 1 - 10, wherein the regenerated polysaccharide is produced in powder or pelletized form by mechanically comminuting it after step S4 in an additional step S4a.

12. A regenerated polysaccharide produced by a process according to any one of claims 1 - 11, wherein the regenerated polysaccharide is provided as a film, and the distances between the fibres range from 10-100 nm.

13. A product made from a regenerated polysaccharide according to claim 12.

## Revendications

1. Procédé de préparation d'un polysaccharide régénéré solide, comprenant les étapes suivantes :
- S1) fournir un polysaccharide,
- S2) dissoudre le polysaccharide dans au moins un solvant électrolytique, un hydroxyde d'onium quaternaire à une concentration d'environ 40 à 80 % en poids dans de l'eau étant utilisé comme solvant électrolytique,
- S3) précipiter le polysaccharide sous forme gélifiée en mettant en contact la solution de polysaccharide avec un réactif électrophile, au moins un carbonate organique cyclique ou au moins un polymère d'un carbonate organique cyclique étant utilisé comme réactif électrophile,
- S4) laver le polysaccharide régénéré.

2. Procédé selon la revendication 1, dans lequel on utilise de la cellulose comme polysaccharide.

3. Procédé selon la revendication 1 ou 2, dans lequel on utilise au moins un hydroxyde d'onium à base de phosphonium et/ou au moins un hydroxyde d'onium à base d'ammonium.

4. Procédé selon la revendication 3, dans lequel on utilise de l'hydroxyde de tétrabutylphosphonium.

5. Procédé selon la revendication 3, dans lequel on utilise de l'hydroxyde de tétrabutylammonium.

6. Procédé selon l'une des revendications précédentes, dans lequel on utilise un solvant supplémentaire à l'étape S2.

7. Procédé selon la revendication 6, dans lequel on utilise du diméthyl-sulfoxyde comme solvant supplémentaire.

8. Procédé selon l'une des revendications précédentes, dans lequel le réactif électrophile est utilisé à une concentration de 80 à 100%.

9. Procédé selon la revendication 1, dans lequel on utilise comme carbonate organique cyclique le carbonate de propylène, le carbonate de viny-léthylène, le carbonate de butyle, le carbonate d'éthylène et/ou le carbonate de vinyle.

10. Procédé selon l'une des revendications précédentes, dans lequel le polysaccharide régénéré est préparé sous forme de film en étalant la solution de polysaccharide sur une surface dans une étape supplémentaire S2a après l'étape S2.

11. Procédé selon l'une des revendications 1 à 10, dans lequel le polysaccharide régénéré est préparé sous forme de poudre ou sous forme granulée par broyage mécanique dans une étape supplémentaire S4a après l'étape S4.

12. Polysaccharide régénéré, obtenu par un procédé selon l'une des revendications 1 à 11, dans lequel le polysaccharide régénéré est fourni sous forme de film et les distances entre les fibres sont de 10 à 100 nm.

13. Produit à base d'un polysaccharide régénéré selon la revendication 12.
